(19) **Europäisches Patentamt**
**European Patent Office**
**Office européen des brevets**

(11) **EP 4 765 618 A2**

(12) **EUROPÄISCHE PATENTANMELDUNG**

(43) Veröffentlichungstag:
24.06.2026 Patentblatt 2026/26

(21) Anmeldenummer: 25222047.0

(22) Anmeldetag: 10.12.2025

(51) Internationale Patentklassifikation (IPC):
*H02P 1/46* (2006.01)   *H02P 6/182* (2016.01)
*H02P 6/20* (2016.01)   *H02P 6/21* (2016.01)

(52) Gemeinsame Patentklassifikation (CPC):
**H02P 1/46; H02P 6/182; H02P 6/21;** H02P 2203/03

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **20.12.2024 DE 102024139423**

(71) Anmelder: **Andreas Stihl AG & Co. KG
71336 Waiblingen (DE)**

(72) Erfinder:
• **Däweritz, Tim
71336 Waiblingen (DE)**
• **Dietrich, Simon
71336 Waiblingen (DE)**
• **Wiesa, Patrick
74354 Besigheim (DE)**
• **Jackenkroll, Jan Lukas
71686 Remseck (DE)**

(54) **STARTEN EINES EC-MOTORS**

(57)   Verfahren zum Starten eines EC-Motors, der einen Stator und einen Rotor aufweist, mit den Schritten: a) Bestimmen einer ersten Position des Rotors im Stillstand des Rotors mittels diskreter Signalinjektion (101); b) Beschleunigen des Rotors mittels eines gesteuerten Drehfeldes (103); c) Bestimmen einer Drehzahl des Rotors auf Basis einer Gegen-EMK nach Erreichen einer vorgegebenen Drehfeldfrequenz in Schritt b) (105); d) Vergleichen der in Schritt c) bestimmten Drehzahl mit einem ersten vorgegebenen Drehzahlwert (107); und e) falls die in Schritt c) bestimmte Drehzahl größer als der erste vorgegebene Drehzahlwert ist: Bestimmen einer zweiten Position des Rotors auf Basis der Gegen-EMK und Wechsel in einen Closed-Loop-Betrieb auf Basis der Gegen-EMK (109).

Fig. 1

**Beschreibung**

Gebiet der Erfindung

Die Erfindung betrifft ein Verfahren zum Starten eines EC-Motors und eine Anordnung mit einem EC-Motor und einer Steuerung, wobei die Steuerung dazu eingerichtet ist, ein solches Verfahren auszuführen. Die vorliegende Erfindung betrifft außerdem ein Gerät und Vorrichtungen, jeweils aufweisend eine solche Anordnung.

Stand der Technik

Motorbetriebene Geräte, insbesondere Gartengeräte, Vorrichtungen zum Einsatz in der Landschaftspflege oder in Straßenmeistereien oder land- oder forstwirtschaftlich genutzte Vorrichtungen, benötigen häufig ein hohes Startmoment, um die mit den Geräten eingesetzten Werkzeuge anzutreiben.

Herkömmliche Vorgehensweisen, einen Motor, insbesondere einen EC-Motor, solcher Geräte mit einem entsprechend großen Startmoment zu starten, erfordern in der Regel den Einsatz von besonderen Sensorsystemen, beispielsweise auf Basis von Hall-Sensoren, um eine initiale Position des Rotors zu bestimmen und den Rotor anschließend in eine definierte Startposition zu bewegen, so dass dieser ausgehend von dieser Startposition beschleunigt werden kann.

Allerdings muss der Rotor für die initiale Positionsbestimmung und Ausrichtung typischerweise lastfrei sein, was eine Einschränkung darstellen kann. Außerdem ist die dem Motorstart vorausgehende Ausrichtung des Rotors vergleichsweise zeitaufwändig und führt zu einer Latenz zwischen Anforderung einer Motorleistung (etwa durch eine Bedienperson des motorbetriebenen Gerätes) und Bereitstellen der angeforderten Motorleistung. Diese Verzögerung kann von der Bedienperson als unangenehm empfunden werden.

Offenbarung der Erfindung

Die Erfindung geht gemäß einem ersten Aspekt aus von einem Verfahren zum Starten eines EC-Motors, der einen Stator und einen Rotor aufweist, mit den Schritten:

a) Bestimmen einer ersten Position des Rotors im Stillstand des Rotors mittels diskreter Signalinjektion;

b) Beschleunigen des Rotors mittels eines gesteuerten Drehfeldes;

c) Bestimmen einer Drehzahl des Rotors auf Basis einer Gegen-EMK nach Erreichen einer vorgegebenen Drehfeldfrequenz in Schritt b);

d) Vergleichen der in Schritt c) bestimmten Drehzahl mit einem ersten vorgegebenen Drehzahlwert; und

e) falls die in Schritt c) bestimmte Drehzahl größer als der erste vorgegebene Drehzahlwert ist: Bestimmen einer zweiten Position des Rotors auf Basis der Gegen-EMK und Wechsel in einen Closed-Loop-Betrieb auf Basis der Gegen-EMK.

Der Erfindung liegt damit die überraschende Erkenntnis zugrunde, dass die für eine passende Bestromung der Spulen des Motors notwendige Positionsinformation des Rotors besonders einfach und zuverlässig mittels diskreter Signalinjektion bestimmt werden kann. Dadurch entfällt die bisherige Notwendigkeit, den Motor in eine definierte Startposition zu bewegen. Stattdessen kann der Rotor direkt aus der initialen (ersten) Position heraus beschleunigt werden, indem die für die erste Position relevanten Spulen aktiviert werden.

Mit dem vorgeschlagenen Verfahren entfällt weiter und vor allem die bisher auf die Ausrichtung des Rotors zurückzuführende Latenz. Zudem muss der Rotor während des Startvorgangs nicht lastfrei sein. Dadurch kann der Motor mit dem vorgeschlagenen Verfahren besonders einfach und ohne Zusatzmittel auch unter solchen Bedingungen gestartet werden, die herkömmlicherweise weitere Maßnahmen erfordert haben. Beispielsweise kann mit dem vorgeschlagenen Verfahren auch der Motor eines Gartengeräts gestartet werden, dessen von dem Motor angetriebenes Werkzeug infolge eines vorangegangenen Einsatzes verklebt ist, wodurch der Motor nicht lastfrei ist.

Auf diese Weise kann vorteilhaft ein hohes Startmoment ohne oder mit jedenfalls reduzierter Latenz erreicht werden. Außerdem kann die Bestimmung der Rotorposition bei Einsatz der diskreten Signalinjektion ohne oder mit weniger Sensoren durchgeführt werden. Insbesondere können beispielsweise Hall-Sensoren eingespart werden. Dadurch verringern sich die Kosten und der Wartungsaufwand für entsprechende Motoren.

Indem darüber hinaus in Schritt c) die infolge der Beschleunigung erreichte Drehzahl des Rotors bestimmt wird, kann besonders einfach und zuverlässig festgestellt werden, ob sich die für die dann bestehende Drehfeldfrequenz erwartete Drehzahl des Rotors eingestellt hat. Dazu wird mit dem ersten vorgegebenen Drehzahlwert also ein Schwellenwert definiert, und wenn die Drehzahl größer als dieser Schwellenwert ist, wird neben der Bestimmung der zweiten Position des Rotors in einen Closed-Loop-Betrieb gewechselt (insbesondere von dem Beschleunigen des Rotors mittels gesteuerten Drehfeldes).

Indem die Prüfung der erreichten Drehzahl des Rotors vorgenommen wird, kann folglich erkannt werden, wenn die Beschleunigung des Rotors (etwa durch eine Änderung der Drehfeldfrequenz des gesteuerten Drehfeldes in Schritt b)) für eine gegebene Last zu schnell erfolgt ist. Durch diese Prüfung kann vorteilhaft zunächst versucht werden, den Rotor zunächst mit geringeren Strömen und/oder Leistungen zu starten. Durch die Möglichkeit mit geringeren Strömen (insbesondere Stromamplituden) und/oder Leistungen (insbesondere Leistungsamplituden) zu arbeiten (etwa beim Bestromen der Motorspulen), kann eine den Startvorgang kontrollierende Elektronik sowie der Motor selbst geschont und eine Überhitzung vermieden werden.

Das vorgeschlagene Verfahren ermöglicht damit das Starten eines EC-Motors mit einem hohen Startmoment in kostengünstiger aber dennoch effektiver und effizienter Weise bei gleichzeitig einem möglichst hohen Komfort für die Bedienperson sowie geringer Belastung für Motor und Elektronik.

Vorteilhaft werden mittels der in Schritt a) bestimmten ersten Position des Rotors eine oder mehrere Spulen des Motors ermittelt, welche für eine, insbesondere die in Schritt b) durchgeführte, Beschleunigung des Rotors zumindest zeitweise (insbesondere zu Beginn des Beschleunigens in Schritt b)) bestromt werden müssen.

Die diskrete Signalinjektion kann dabei aufweisen, ein periodisches Hochfrequenz-Spannungssignal in die Spulen des Motors einzuprägen und die erste Position basierend auf den daraufhin auftretenden Hochfrequenz-Strömen zu ermitteln.

Vorteilhaft weist das Beschleunigen in Schritt b) einen Open-Loop-Betrieb auf. Durch das Beschleunigen wird die Drehzahl des Rotors hochgerampt, mithin erhöht. Der Verlauf der Drehzahl während des Beschleunigens in Schritt b) kann dabei beispielsweise vor Beginn der Beschleunigung berechnet und/oder festgelegt werden. Der Drehzahlverlauf und damit das Hochrampen kann beispielsweise abhängig davon sein, ob der Schritt b) zum ersten Mal durchgeführt wird oder in der wievielten Wiederholung der Schritt b) durchgeführt wird. Auf die Option der Wiederholung wird weiter unten noch im Detail eingegangen.

In Ausführungsformen kann das Beschleunigen in Schritt b) ein zeitabhängiges Beschleunigen sein oder aufweisen. Besonders vorteilhaft ist es, wenn das Beschleunigen in Schritt b) in unterschiedlichen Zeitabschnitten unterschiedliche Änderungsraten der Drehzahl aufweist. Beispielsweise kann in zumindest einem ersten Zeitabschnitt eine quadratische Drehzahländerung erfolgen. Alternativ oder ergänzend kann in zumindest einem zweiten Zeitabschnitt eine lineare Drehzahländerung erfolgen.

In einer Ausführungsform weist das Beschleunigen des Rotors in Schritt b) auf, dass ein Motorstrom, insbesondere ein anfänglicher Motorstrom während des Beschleunigens, in Abhängigkeit einer Motortemperatur eingestellt wird.

In einer Ausführungsform weist das Beschleunigen des Rotors in Schritt b) eine Regelung so, dass eine Motorstromamplitude konstant ist, auf. Dies ermöglicht ein rasches Erhöhen (Hochrampen) der Drehzahl. Alternativ kann das Verfahren auch für einen vergleichsweise sanften Anlauf des Rotors über eine längere Zeitdauer im Vergleich zum raschen Hochrampen angepasst werden. Für den sanften Anlauf des Rotors kann das Beschleunigen des Rotors in Schritt b) eine variable Motorstromamplitude umfassen.

Vorteilhaft kann bei der Beschleunigung des Rotors in Schritt b) zumindest zeitweise und/oder zumindest teilweise ein I-f-Startverfahren ausgeführt werden. Beispielsweise kann der Open-Loop-Betrieb ganz oder teilweise mittels des I-f-Startverfahrens durchgeführt werden.

Das Beschleunigen des Rotors in Schritt b) mittels des gesteuerten Drehfeldes weist vorteilhaft zumindest zeitweise ein kontinuierliches Erhöhen der Drehfeldfrequenz auf.

Zusätzlich oder alternativ kann das Beschleunigen des Rotors in Schritt b) mittels des gesteuerten Drehfeldes während eines definierten Zeitraums durchgeführt werden. Insbesondere wird bei einem, weiter unten näher beschriebenen, Wiederholen des Schritts b) im Vergleich zum vorherigen Ausführen des Schritts b) der definierte Zeitraum angepasst, insbesondere verlängert.

Die Drehfeldfrequenz (des gesteuerten Drehfeldes) ist die Frequenz des gesteuerten Drehfeldes. Insbesondere ist die Motorstromamplitude von der Drehfeldfrequenz abhängig.

Vorteilhaft weist das Bestimmen der Drehzahl des Rotors in Schritt c) den Einsatz eines FOC mit einem Flussbeobachter auf. Beispielsweise kann das Bestimmen der Drehzahl des Rotors in Schritt c) ein Bestimmen einer oder mehrerer von in den Spulen des Motors induzierten Spannungen aufweisen, insbesondere nachdem der Spulenstrom auf Null geregelt wurde.

Das Bestimmen der Drehzahl des Rotors in Schritt c) kann beispielsweise ein direktes oder ein indirektes Bestimmen der Drehzahl des Rotors sein. Ein indirektes Bestimmen der Drehzahl kann beispielsweise über die Motorspannung erfolgen. Dabei kann beispielsweise ausgenutzt werden, dass typischerweise ein linearer Zusammenhang zwischen der in den Motorwicklungen induzierten Spannung (Motorspannung) und der Drehzahl (EMK-Spannung) besteht. Dem Fachmann ist außerdem bekannt, dass anstelle einer Drehzahl auch eine Winkelgeschwindigkeit ermittelt werden könnte, da zwischen diesen ein bekannter Zusammenhang besteht.

In einer Ausführungsform beginnt das Bestimmen der Drehzahl des Rotors auf Basis der Gegen-EMK in Schritt c) nach dem Abschluss des Beschleunigens in Schritt b). Das Bestimmen der Drehzahl des Rotors auf Basis der Gegen-EMK in Schritt c) kann aber in Ausführungsformen auch zumindest teilweise bereits während des Beschleunigens des Rotors in Schritt b) beginnen. Die Schritte b) und c) können dann mit anderen Worten zumindest teilweise überlappen und stellen dadurch zumindest teilweise parallele Schritte dar.

Der Begriff Gegen-EMK steht für Gegen-Elektromotorische Kraft, und ist dem Fachmann an und für sich bekannt.

Insbesondere wird für den in Schritt e) vollzogenen Wechsel in den Closed-Loop-Betrieb die erste und/oder zweite Rotorposition einbezogen. Dadurch kann der Wechsel unter Berücksichtigung der entsprechenden Rotorposition durchgeführt werden.

Insbesondere wird in Schritt e) nach dem Wechsel in den Closed-Loop-Betrieb eine kontinuierliche Bestimmung einer dritten Position des Rotors auf Basis der Gegen-EMK durchgeführt. Eine kontinuierliche Bestimmung der dritten Position des Rotors kann beispielsweise eine periodisch wiederholte Bestimmung der dritten Position des Rotors aufweisen oder darstellen. Dadurch kann also in definierten Zeitabständen eine Bestimmung der dritten Position des Rotors durchgeführt werden.

Dadurch liegt für den Rotor ein aktueller Positionswert vor, der für weitere Maßnahmen vorteilhaft eingesetzt werden kann. Die dritte Position kann bei jeder neuen Bestimmung einen neuen Wert aufweisen.

Die erste Position kann zweckmäßigerweise eine Winkelposition des Rotors sein. Die zweite Position kann zweckmäßigerweise eine Winkelposition des Rotors sein. Die dritte Position kann zweckmäßigerweise eine Winkelposition des Rotors sein.

Die zweite Position wird vorteilhaft erst benötigt, wenn die in Schritt c) bestimmte Drehzahl größer als der erste vorgegebene Drehzahlwert ist. Dennoch ist es besonders vorteilhaft möglich, bereits in Schritt c) die zweite Position auf Basis der gleichen Daten wie die Drehzahl des Rotors, insbesondere gleichzeitig, zu bestimmen. Dadurch kann das Starten des Motors schneller und somit besonders effizient erfolgen. In alternativen Ausführungsformen kann daher vorgesehen sein, dass die zweite Position des Rotors nicht in Schritt e), sondern in Schritt c), insbesondere gleichzeitig mit der Drehzahl und/oder auf Basis der gleichen Daten wie die Drehzahl des Rotors, auf Basis der Gegen-EMK bestimmt wird. Schritt c) lautet hierbei dann: Bestimmen einer Drehzahl des Rotors und einer zweiten Position des Rotors auf Basis, insbesondere einer einzigen, Gegen-EMK nach Erreichen einer vorgegebenen Drehfeldfrequenz in Schritt b). Und optional lautet Schritt e) hierbei dann: falls die in Schritt c) bestimmte Drehzahl größer als der erste vorgegebene Drehzahlwert ist: Wechsel in einen Closed-Loop-Betrieb auf Basis der Gegen-EMK. Auch für diese alternative Ausführungsform gelten alle beschriebenen Vorteile und Optionen gleichermaßen, sofern sich aus dem Zusammenhang nichts anderes ergibt. Auf diese Ausführungsform wird auch nochmals weiter unten in einem separaten Aspekt eingegangen.

Unter einem gesteuerten Drehfeld wird insbesondere ein Open-Loop-Control (der hier auch als Open-Loop-Betrieb bezeichnet wird), insbesondere durch Einprägen eines Stroms, durch Vorgeben eines Winkels und/oder Einregeln einer Motorstromamplitude, verstanden. Der eingeprägte Strom ist insbesondere ein Strom, der in den Motor fließt (Motorphase). Je nach interner Verdrahtung kann der Strom sich in verschiedene Wicklungsköpfe aufteilen.

Unter einer Motorstromamplitude wird insbesondere die Amplitude des Motorstroms verstanden, die sich insbesondere aus einem feldbildenden Motorstromanteil $i_d$ und einem momentbildenden Motorstromanteil $i_q$ zusammensetzt. Die Motorstromamplitude kann beispielsweise aus den Phasenströmen $I_U$, $I_V$ und $I_W$ berechnet werden. Damit ergibt sich die Motorstromamplitude zu $I = \sqrt{I_\alpha{}^2 + I_\beta{}^2}$. Die Ströme $I_\alpha$ und $I_\beta$ können anhand der folgenden Beziehung berechnet werden:

$$\begin{bmatrix} I_\alpha \\ I_\beta \end{bmatrix} = \frac{2}{3} \begin{bmatrix} 1 & -\frac{1}{2} & -\frac{1}{2} \\ 0 & \frac{\sqrt{3}}{2} & -\frac{\sqrt{3}}{2} \end{bmatrix} \begin{bmatrix} I_U \\ I_V \\ I_W \end{bmatrix}$$

Da im Open-Loop-Betrieb keine (realen) d- und q-Ströme vorhanden sind, ist es vorteilhaft, die Beziehung mit den Phasenströme zu verwenden.

Insbesondere ist bei dem Closed-Loop-Betrieb, der insbesondere eine Closed-Loop-Stromregelung aufweist oder darstellt, der Rotorwinkel des Motors bekannt. Dieser kann beispielsweise für eine Koordinatentransformation der Motorströme verwendet werden. Im Open-Loop-Betrieb, der insbesondere eine Open-Loop-Stromregelung aufweist oder darstellt, wird insbesondere ein Rotorwinkel des Motors angenommen (zum Beispiel ein "hochgerampte" Winkel aus dem Open-Loop-Rampup). Dieser entspricht aber nicht zwingend dem aktuellen Rotorwinkel des Motors

Der Closed-Loop-Betrieb kann auch als Closed-Loop-Stromregelung bezeichnet werden. Insbesondere umfasst der Closed-Loop-Betrieb eine feldorientierte Regelung (FOC).

Beispielsweise kann der Closed-Loop-Betrieb aufweisen: Initialisieren eines Flussbeobachters ("flux observer") basierend auf einer Position des Rotors, insbesondere der zweiten Position des Rotors; und Betrieb des Rotors mittels einer feldorientierte Regelung (FOC).

Alternativ oder ergänzend kann auch vorgesehen sein, dass die diskrete Signalinjektion in Schritt a) eine definierte und/oder endliche Anzahl an Pulsen umfasst.

Vorteilhaft ist die Form, die Zeitdauer (insbesondere die Halbwertsbreite) und/oder die Reihenfolgen der Phasen der einzelnen Pulse vorab definiert. In Ausführungsformen sind die Pulse jeweils identisch ausgebildet. Vorteilhaft ist der zeitliche Abstand jeweils unmittelbar aufeinanderfolgender Pulse vordefiniert.

Beispielsweise weist die diskrete Signalinjektion in Schritt a) zwischen einem und hundert Pulse auf.

Beispielsweise weist die diskrete Signalinjektion in Schritt a) zumindest einen, insbesondere genau einen, INFORM-Puls auf. INFORM steht für INdirect Flux detection by Online Reactance Measurement und ist dem Fachmann an und für sich bekannt.

Alternativ oder ergänzend kann auch vorgesehen sein, dass der Schritt b) umfasst: Beschleunigen des Rotors, wobei ein Motorstrom eingeregelt wird und eine Amplitude des Motorstroms abhängig von dem gesteuerten Drehfeld ist, wobei die Amplitude des Motorstroms insbesondere konstant ist.

Auf diese Weise kann besonders zuverlässig und dennoch auf vergleichsweise einfache Weise die Beschleunigung des Motors durchgeführt werden.

Alternativ oder ergänzend kann auch vorgesehen sein, dass der Schritt c) umfasst: Bestimmen der Drehzahl des Rotors auf Basis der Gegen-EMK nach Erreichen einer definierten Zeit.

Insbesondere bezieht sich die definierte Zeit auf eine vergangene Zeit seit dem Start der Beschleunigung in Schritt b).

Demnach wird das Bestimmen der Drehzahl des Rotors auf Basis der Gegen-EMK in Schritt c) erst nach Erreichen der vorgegebenen Drehfeldfrequenz in Schritt b) und nach Erreichen der definierten Zeit, wenn also beide Bedingungen erfüllt sind, durchgeführt. Insbesondere wird die vorgegebene Drehfeldfrequenz nach der definierten Zeit erreicht. Damit entspricht die definierte Zeit derjenigen Zeitdauer, die benötigt wird, um die vorgegebene Drehfeldfrequenz zu erreichen.

Das Bestimmen der Drehzahl in Schritt b) (auch) in Abhängigkeit von dem Erreichen einer definierten Zeit, ermöglicht es vorteilhaft, den Start der Drehzahlbestimmung weiter zu spezifizieren. Durch die Zeitvorgabe kann das Bestimmen der Drehzahl besonders einfach und dennoch zuverlässig zu einem Zeitpunkt erfolgen, ab dem ein anfänglicher Beschleunigungsvorgang planmäßig abgeschlossen ist oder jedenfalls sein sollte. Auf diese Weise kann der Beschleunigungsvorgang sehr zuverlässig durchgeführt werden.

Alternativ oder ergänzend kann auch vorgesehen sein, dass der Schritt c) umfasst: Bestimmen der Drehzahl des Rotors anhand einer gestellten Motorspannung, insbesondere Reduzieren der Amplitude des Motorstroms zeitlich vor dem Bestimmen der Drehzahl.

Beispielsweise kann die Motorspannung (in den Wicklungen induzierte Spannung) mittels einer Nullstromregelung über die gestellte Motorspannung robuster und genauer bestimmt werden.

Zusätzlich oder alternativ weist das Verfahren auf, dass zeitlich zwischen dem Schritt b) und dem Schritt c) eine Nullstrom-Regelung durchgeführt wird.

Eine Nullstromregelung kann beispielsweise ein Regeln des Motorstroms in den drei Motorphasen auf 0 A aufweisen.

Insbesondere umfasst der Schritt c), eine Motorstromamplitude auf einen Soll-Wert Null zu regeln und/oder ein Reduzieren des Motorstroms auf Null und/oder nahe Null, insbesondere indem die Motorstromamplitude auf einen Soll-Wert Null geregelt wird.

Alternativ oder ergänzend kann auch vorgesehen sein, dass der Schritt c) umfasst: Bestimmen der Drehzahl des Rotors über eine gemessene Motorspannung im Freilauf.

Dies stellt eine besonders einfache und dennoch zuverlässige Möglichkeit der Drehzahlbestimmung dar.

Dazu kann also der Rotor im Freilauf betrieben und währenddessen die Motorspannung gemessen werden. Beispielsweise kann die Motorspannung eine induzierte Spannung während des Freilaufs sein.

Der Rotor befindet sich im Freilauf, wenn keine Spannung an die Motorphasen angelegt wird.

Alternativ oder ergänzend kann auch vorgesehen sein, dass, falls die in Schritt c) bestimmte Drehzahl kleiner als der erste vorgegebene Drehzahlwert ist, ein nach dem Schritt d) auszuführender Schritt f) umfasst: Abbremsen des Rotors und Wiederholen der Schritte a) bis d).

Wenn folglich die in Schritt c) bestimmte Drehzahl kleiner als der erste vorgegebene Drehzahlwert ist, sich also die für die in Schritt c) bestehende Drehfeldfrequenz erwartete Drehzahl des Rotors in Ausführungsformen dann nicht eingestellt hat, kann der Startvorgang nach dem Abbremsen des Rotors nochmals in einem neuen Anlauf, insbesondere mit angepassten Parametern des Motors, versucht werden. Beispielsweise können dann höhere Ströme (insbesondere Stromamplituden) und/oder Leistungen (insbesondere Leistungsamplituden) eingesetzt werden (etwa beim Bestromen der Motorspulen). Schritt e) wird in diesem Fall zweckmäßigerweise nicht ausgeführt.

In Ausführungsformen wird das Wiederholen der Schritte a) bis d) und gegebenenfalls ein Ausführen des Schritts e) zeitlich nach dem Abbremsen des Rotors vorgesehen.

Ein Wiederholen des Schritts b), insbesondere ein Wiederholen der Schritte a) bis d), ermöglicht, dass im Vergleich zum vorherigen Schritt b) ein Ruck des Motors reduziert werden kann. Denn zweckmäßigerweise wird bei einem Wiederholen des Schritts b), insbesondere der Schritte a) bis d), die Beschleunigung und/oder der Ruck der Drehzahlrampe angepasst.

Insbesondere kann vorgesehen sein, dass beim Wiederholen des Schrittes b) im Vergleich zum vorherigen Schritt b) das gesteuerte Drehfeld und/oder eine von der Drehfeldfrequenz abhängige Motorstromamplitude und/oder eine Motortemperatur angepasst wird.

Alternativ oder ergänzend kann auch vorgesehen sein, dass der Schritt f) umfasst: Abbremsen mittels einer Kurzschlussbremsung.

Das Abbremsen des Rotors in Schritt f) kann folglich das Durchführen einer Kurzschlussbremsung, insbesondere für eine definierte Zeitdauer, aufweisen.

Das Abbremsen kann beispielsweise für eine definierte Zeitdauer durchgeführt werden. In Ausführungsformen weist das Abbremsen des Rotors ein Abbremsen des Rotors bis zum Stillstand auf. Beispielsweise kann die definierte Zeitdauer entsprechend groß gewählt werden. Dadurch kann der Stillstand zuverlässig erreicht werden.

Alternativ oder ergänzend kann auch vorgesehen sein, dass der Schritt f) umfasst: Abbremsen bis zu einer Drehzahl des Rotors, die kleiner als ein zweiter vorgegebener Drehzahlwert ist.

Dadurch kann besonders zuverlässig eine klar definierte Situation für die Wiederholung der Schritte hergestellt werden.

Insbesondere ist der zweite vorgegebene Drehzahlwert maximal 20 % und/oder minimal 10 % einer Nenndrehzahl des Rotors und/oder des ersten vorgegebenen Drehzahlwerts.

Alternativ oder ergänzend kann auch vorgesehen sein, dass der Schritt f) umfasst: Bestimmen der Drehzahl anhand der Amplitude des Motorstroms und/oder einer Frequenz des Motorstroms.

Beispielsweise kann auf Grundlage der Drehzahl die definierte Zeitdauer ermittelt werden. Damit kann die definierte Zeitdauer für das Abbremsen für größere Drehzahlen länger gewählt werden als für kleinere Drehzahlen. Somit kann das Abbremsen als Teil des Startvorgangs sehr effizient durchgeführt werden.

Alternativ oder ergänzend kann auch vorgesehen sein, dass beim Wiederholen des Schritts b) im Vergleich zum vorherigen Schritt b) das gesteuerte Drehfeld und/oder die, insbesondere von der Drehfeldfrequenz abhängige, Amplitude des Motorstroms angepasst wird.

Durch ein Anpassen des gesteuerten Drehfeldes und/oder der Amplitude des Motorstroms kann beispielsweise besonders einfach und zuverlässig auf das Vorliegen einer höheren Last im Vergleich zu einer erwarteten Standardlast reagiert werden und der Rotor vorteilhaft im nächsten Anlauf dann auch unter diesen Bedingungen vollständig gestartet werden (oder vorteilhaft in nach einer oder mehreren weiteren Wiederholungen). Dies kann beispielsweise bei einem verklebten Werkzeug (etwa bei verharzten Messern einer Heckenschere), das von dem Motor angetrieben wird, zweckmäßig sein.

Durch angepasste Parameter kann der Rotor beim Wiederholen des Schritts b) im Vergleich zum vorherigen Schritt b) vorteilhaft mit geringerem Ruck und/oder geringerer Beschleunigung in Bewegung versetzt werden.

Beispielsweise kann beim Wiederholen des Schritts b) im Vergleich zum vorherigen Schritt b) das gesteuerte Drehfeld mit einer reduzierten Änderungsrate der Drehfeldfrequenz erzeugt werden. Dadurch kann auch eine höhere Last gewissermaßen sicher "mitgenommen" werden.

Beispielsweise kann beim Wiederholen des Schritts b) im Vergleich zum vorherigen Schritt b) die Amplitude des Motorstroms erhöht und/oder verringert werden. Dadurch kann auch eine höhere Last gewissermaßen sicher "mitgenommen" werden. Somit kann mit einem niedrigeren Strom begonnen und anschließend bedarfsweise höhere Ströme eingestellt werden.

Geringe Ströme haben die bereits oben erwähnten Vorteile, ermöglichen also vorteilhaft die thermische Belastung der Elektronik und/oder des Motors zu reduzieren.

Optional kann beim Wiederholen des Schritts b) im Vergleich zum vorherigen Schritt b) die Drehzahl des Rotors auf Basis der Gegen-EMK nach Erreichen einer neu definierten Zeit bestimmt werden. Dadurch unterscheiden sich also die Zeiten, nach denen die Drehzahl bestimmt wird bei dem ersten Versuch und der Wiederholung.

Bei mehr als einer Wiederholung des Schritts b) erfolgt vorteilhaft bei zumindest einer der zumindest einen weiteren Wiederholung die Anpassung des gesteuerten Drehfeldes und/oder der Motorstromamplitude mit jeweils unterschiedlichen absoluten Änderungen der Parameter, insbesondere der Änderungsrate der Drehfeldfrequenz und/oder der Motorstromamplitude.

Alternativ oder ergänzend kann auch vorgesehen sein, dass beim Wiederholen des Schritts b) im Vergleich zum vorherigen Schritt b) das gesteuerte Drehfeld und/oder die, insbesondere von der Drehfeldfrequenz abhängige, Amplitude des Motorstroms schrittweise angepasst wird mit zunehmender Schrittweite.

Das heißt, mit jedem Wiederholen des Schritts b) wird das gesteuerte Drehfeld und/oder die Amplitude des Motorstroms angepasst. Dadurch kann das Starten des Motors besonders effizient durchgeführt werden.

Die Erfindung geht gemäß einem zweiten Aspekt aus von einem Verfahren zum Starten eines EC-Motors, der einen Stator und einen Rotor aufweist, mit den Schritten:

a) Bestimmen einer ersten Position des Rotors im Stillstand des Rotors mittels diskreter Signalinjektion;

b) Beschleunigen des Rotors mittels eines gesteuerten Drehfeldes;

c) Bestimmen einer Drehzahl des Rotors und einer zweiten Position des Rotors auf Basis einer, insbesondere einer einzigen, Gegen-EMK nach Erreichen einer vorgegebenen Drehfeldfrequenz in Schritt b);

d) Vergleichen der in Schritt c) bestimmten Drehzahl mit einem ersten vorgegebenen Drehzahlwert; und

e) falls die in Schritt c) bestimmte Drehzahl größer als der erste vorgegebene Drehzahlwert ist: Wechsel in einen Closed-Loop-Betrieb auf Basis der Gegen-EMK.

Das Verfahren gemäß dem zweiten Aspekt der Erfindung unterscheidet sich damit von dem Verfahren gemäß dem ersten Aspekt der Erfindung insbesondere dadurch, dass die zweite Position des Rotors nicht in Schritt e), sondern in Schritt c) bestimmt wird. Dadurch kann das Starten des Motors schneller und somit besonders effizient erfolgen.

Alle Vorteile und Optionen, die in Bezug auf das Verfahren gemäß dem ersten Aspekt der Erfindung beschrieben wurden, gelten dabei entsprechend auch für das Verfahren gemäß dem zweiten Aspekt der Erfindung, sofern sich aus dem Zusammenhang nichts anderes ergibt. Daher kann insoweit an dieser Stelle auf die vorherigen Ausführungen verwiesen werden.

Die Erfindung geht gemäß einem dritten Aspekt aus von einer Anordnung, aufweisend einen EC-Motor, der einen Stator und einen Rotor aufweist, und eine mit dem EC-Motor elektrisch verbundene oder verbindbare Steuerung, wobei die Steuerung zur Ausführung eines Verfahrens gemäß dem ersten und/oder zweiten Aspekt der Erfindung eingerichtet ist.

Alle Vorteile, die in Bezug auf das Verfahren gemäß dem ersten und/oder zweiten Aspekt der Erfindung beschrieben wurden, gelten dabei entsprechend auch für die Anordnung gemäß dem dritten Aspekt der Erfindung. Daher kann insoweit an dieser Stelle auf die vorherigen Ausführungen verwiesen werden.

Die Merkmale, die in Bezug auf das Verfahren gemäß dem ersten und/oder zweiten Aspekt der Erfindung beschrieben wurden, können dabei auch bei der Anordnung, und insbesondere bei der Steuerung, entsprechend vorgesehen sein, einzeln und in beliebiger Kombination, sofern sich aus dem Zusammenhang nichts anderes ergibt.

Insbesondere ist die Steuerung dazu eingerichtet, das Verfahren gemäß dem ersten und/oder zweiten Aspekt der Erfindung durchzuführen. Dazu kann die Steuerung mit den anderen Komponenten des Motors, wie Rotor und Stator, zusammenwirken. Die Steuerung kann in Wirkverbindung mit jeweils dem Rotor und/oder Stator sein.

Die Steuerung kann beispielsweise in Software, in Hardware oder als eine Kombination aus beidem realisiert sein. Die Steuerung kann eine Vorrichtung zur Datenverarbeitung sein. Die Steuerung kann alternativ oder ergänzend einen Speicher, einen Prozessor, eine Empfangseinrichtung, eine Sendeeinrichtung oder eine beliebige Kombination davon aufweisen. Die Steuerung kann alternativ oder ergänzend alles, was von dieser aufgewiesen ist, wie insbesondere alle notwendigen Ressourcen, beispielsweise in Form von Software- und/oder Hardwareressourcen, bereitstellen und/oder verfügbar machen und/oder aufweisen.

Die Steuerung ist zweckmäßigerweise mit dem Motor elektrisch und/oder datentechnisch verbunden.

Die Steuerung weist vorteilhaft Schnittstellen zum Empfangen von Sensorsignalen und/oder zum Senden von Befehlen und/oder Mittel zum Verarbeiten, Auswerten und/oder Analysieren der jeweiligen Signale auf.

Die Erfindung geht gemäß einem vierten Aspekt aus von einem Gartengerät, einer Vorrichtung zum Einsatz in der Landschaftspflege oder in Straßenmeistereien und/oder einer land- oder forstwirtschaftlich genutzten Vorrichtung, jeweils aufweisend eine Anordnung gemäß dem dritten Aspekt der Erfindung, wobei (i) das Gartengerät oder die Vorrichtung mittels eines Akkus betreibbar ist und/oder (ii) das Gartengerät oder die Vorrichtung als eine Heckenschere oder eine Kreiselschere oder eine Grasschere oder ein Grastrimmer oder ein Heckenschneider oder ein Hochentaster oder ein Bohrgerät oder ein Blasgerät oder ein Reinigungsgerät, insbesondere ein Hochdruckreiniger, oder ein Sauggerät oder ein Spritz- und/oder Sprühgerät oder eine Säge oder ein Gehölzschneider oder eine Astschere oder ein Multi-Tool oder ein Freischneider oder ein Gesteinschneider oder ein Trennschleifer ausgebildet ist.

Alle Vorteile, die in Bezug auf das Verfahren gemäß dem ersten und/oder zweiten Aspekt der Erfindung beschrieben wurden, gelten dabei entsprechend auch für das Gerät und die Vorrichtungen gemäß dem vierten Aspekt der Erfindung. Daher kann insoweit an dieser Stelle auf die vorherigen Ausführungen verwiesen werden.

Weitere Merkmale und Vorteile der Erfindung ergeben sich aus der nachfolgenden Beschreibung, in der im Einzelnen beschriebene Ausführungsformen der Erfindung anhand schematischer Zeichnungen erläutert werden. Es zeigen:

Fig. 1    ein Ablaufdiagramm eines Verfahrens gemäß dem ersten Aspekt der Erfindung;

Fig. 2    ein Ablaufdiagramm eines Verfahrens gemäß dem zweiten Aspekt der Erfindung;

Fig. 3    eine schematische Darstellung einer Anordnung gemäß dem dritten Aspekt der Erfindung; und

Fig. 4    eine schematische Darstellung eines Gartengeräts und/oder einer Vorrichtung gemäß dem vierten Aspekt der Erfindung.

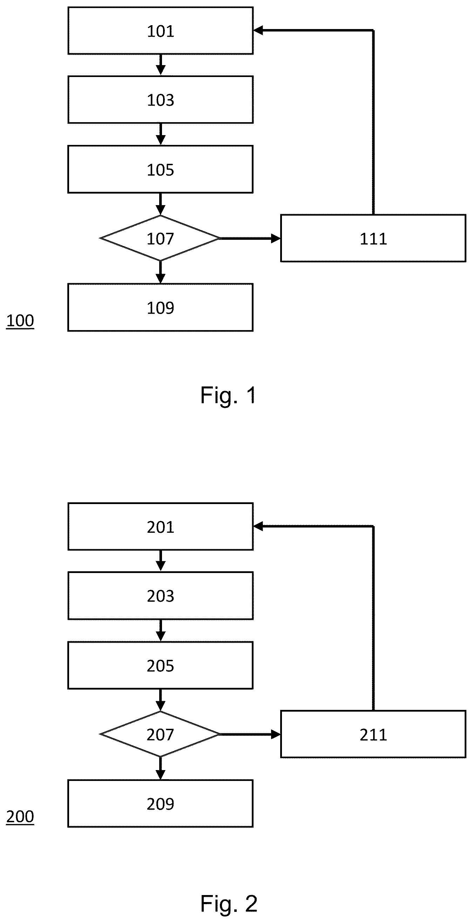

Fig. 1 zeigt ein Ablaufdiagramm 100 eines Verfahrens gemäß dem ersten Aspekt der Erfindung. Das Verfahren dient zum Starten eines EC-Motors, der einen Stator und einen Rotor aufweist.

In Schritt 101 wird eine erste Position des Rotors im Stillstand des Rotors mittels diskreter Signalinjektion bestimmt. Die erste Position kann ein Winkel des Rotors sein.

Beispielsweise kann die diskrete Signalinjektion mittels eines INFORM-Pulses durchgeführt werden.

In Schritt 103 wird der Rotor mittels eines gesteuerten Drehfeldes beschleunigt.

Das Beschleunigen kann dabei einen Open-Loop-Betrieb aufweisen. Dabei wird die Drehzahl des Rotors hochgerampt, also erhöht. Der Verlauf der Drehzahl kann dabei beispielsweise vor Beginn der Beschleunigung berechnet werden. Der Drehzahlverlauf und damit das Hochrampen kann beispielsweise davon abhängen, in der wievielten Wiederholung der Schritt 103 durchgeführt wird. Beispielsweise erfolgt das Beschleunigen zeitabhängig. Hierbei können in unterschiedlichen Zeitbereichen unterschiedliche Änderungsraten vorgesehen werden. In einem Zeitbereich kann beispielsweise eine lineare Änderungsrate vorgesehen sein.

In Schritt 105 wird eine Drehzahl des Rotors auf Basis einer Gegen-EMK nach Erreichen einer vorgegebenen Drehfeldfrequenz in Schritt 103 bestimmt.

In Schritt 107 wird die in Schritt 105 bestimmte Drehzahl mit einem ersten vorgegebenen Drehzahlwert verglichen.

Falls die in Schritt 105 bestimmte Drehzahl größer als der erste vorgegebene Drehzahlwert ist, wird in Schritt 109 eine zweite Position des Rotors auf Basis der Gegen-EMK bestimmt und in einen Closed-Loop-Betrieb auf Basis der Gegen-EMK gewechselt.

Die zweite Position kann ein Winkel des Rotors sein.

Im Rahmen des Closed-Loop-Betriebs kann beispielsweise ein Flussbeobachter ("flux observer") basierend auf der zweiten Position des Rotors initialisiert werden und der Rotor mittels einer feldorientierte Regelung (FOC) betrieben werden.

Optional kann, falls die in Schritt 105 bestimmte Drehzahl kleiner als der erste vorgegebene Drehzahlwert ist, im Anschluss an Schritt 107 in Schritt 111 der Rotor abgebremst werden und die Schritte 101 bis 107 wiederholt werden. Anschließend kann abhängig von der dann in Schritt 105 bestimmten Drehzahl entweder gemäß Schritt 109 verfahren werden oder wieder ein Abbremsen des Rotors in Schritt 111 durchgeführt werden, optional gefolgt von zumindest einer weiteren Wiederholung der Schritte 101 bis 107.

Fig. 2 zeigt ein Ablaufdiagramm 200 eines Verfahrens gemäß dem zweiten Aspekt der Erfindung. Das Verfahren dient ebenfalls zum Starten eines EC-Motors, der einen Stator und einen Rotor aufweist. Das Verfahren ist dabei ganz ähnlich zu dem in Bezug auf das Ablaufdiagramm 100 der Fig. 1 beschriebene Verfahren gemäß dem ersten Aspekt der Erfindung. Die Schritte 201, 203, 207 und 211 entsprechen dabei gerade den Schritten 101, 103, 107 und 111.

Allerdings wird in Schritt 205 eine Drehzahl des Rotors und eine zweite Position des Rotors auf Basis einer, insbesondere einer einzigen, Gegen-EMK nach Erreichen einer vorgegebenen Drehfeldfrequenz in Schritt 203 bestimmt.

Die zweite Position kann ein Winkel des Rotors sein.

Falls die in Schritt 205 bestimmte Drehzahl größer als der erste vorgegebene Drehzahlwert ist, wird in Schritt 209 in einen Closed-Loop-Betrieb auf Basis der Gegen-EMK gewechselt.

Mit anderen Worten, die Bestimmung der zweiten Position des Rotors findet nun bereits in Schritt 205 anstatt in Schritt 209 statt.

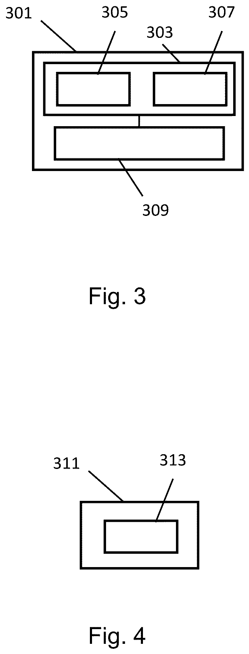

Fig. 3 zeigt eine schematische Darstellung einer Anordnung 301 gemäß dem dritten Aspekt der Erfindung.

Die Anordnung 301 weist einen EC-Motor 303 auf. Der EC-Motor weist einen Stator 305 und einen Rotor 307 auf. Der EC-Motor 301 ist elektrisch mit einer Steuerung 309 verbunden.

Die Steuerung 309 ist zur Ausführung eines Verfahrens gemäß dem ersten und/oder zweiten Aspekt der Erfindung eingerichtet. Dadurch kann die Steuerung 309 den Motor 303 besonders vorteilhaft starten. Dies kann beispielsweise mit dem in Bezug auf das Ablaufdiagramm 100 der Fig. 1 beschriebene Verfahren gemäß dem ersten Aspekt der Erfindung oder mit dem in Bezug auf das Ablaufdiagramm 200 der Fig. 2 beschriebene Verfahren gemäß dem zweiten Aspekt der Erfindung erfolgen.

Fig. 4 zeigt eine schematische Darstellung eines Gartengeräts und/oder einer Vorrichtung 311 gemäß dem vierten Aspekt der Erfindung.

Das Gerät bzw. die Vorrichtung 311 weist eine Anordnung 313 gemäß dem dritten Aspekt der Erfindung auf. Die Anordnung 313 kann beispielsweise identisch zu der Anordnung 301 sein.

Beispielsweise kann die Vorrichtung zum Einsatz in der Landschaftspflege oder in Straßenmeistereien und/oder eine land- oder forstwirtschaftlich genutzte Vorrichtung sein. Bei dem Gerät und/oder der Vorrichtung 311 kann es sich beispielsweise um eine Heckenschere oder um eine Kettensäge handeln.

Die in der vorangehenden Beschreibung, in den Zeichnungen und in den Ansprüchen offenbarten Merkmale können sowohl einzeln als auch in beliebiger Kombination wesentlich für die Erfindung in ihren verschiedenen Ausführungsformen sein.

Bezugszeichen

100    Ablaufdiagramm

101    Bestimmen einer ersten Position eines Rotors eines Motors

103    Beschleunigen des Rotors

105    Bestimmen einer Drehzahl des Rotors

107    Vergleich der bestimmten Drehzahl mit einem vorgegebenen Drehzahlwert

109    Bestimmen einer zweiten Position des Rotors und Wechsel in einen Closed-Loop-Betrieb

111    Abbremsen des Rotors

200    Ablaufdiagramm

201    Bestimmen einer ersten Position eines Rotors eines Motors

203    Beschleunigen des Rotors

205    Bestimmen einer Drehzahl und einer zweiten Position des Rotors

207    Vergleich der bestimmten Drehzahl mit einem vorgegebenen Drehzahlwert

209    Wechsel in einen Closed-Loop-Betrieb

211    Abbremsen des Rotors

301    Anordnung

303    EC-Motor

305    Stator

307    Rotor

309    Steuerung

311    Gerät, Vorrichtung

313    Anordnung

**Patentansprüche**

1.  Verfahren zum Starten eines EC-Motors (303), der einen Stator (305) und einen Rotor (307) aufweist, mit den Schritten:

    a) Bestimmen einer ersten Position des Rotors (307) im Stillstand des Rotors (307) mittels diskreter Signalinjektion (101);
    b) Beschleunigen des Rotors (307) mittels eines gesteuerten Drehfeldes (103);
    c) Bestimmen einer Drehzahl des Rotors (307) auf Basis einer Gegen-EMK nach Erreichen einer vorgegebenen Drehfeldfrequenz in Schritt b) (105);
    d) Vergleichen der in Schritt c) bestimmten Drehzahl mit einem ersten vorgegebenen Drehzahlwert (107); und
    e) falls die in Schritt c) bestimmte Drehzahl größer als der erste vorgegebene Drehzahlwert ist: Bestimmen einer zweiten Position des Rotors (307) auf Basis der Gegen-EMK und Wechsel in einen Closed-Loop-Betrieb auf Basis der Gegen-EMK (109).

2.  Verfahren zum Starten eines EC-Motors (303), der einen Stator (305) und einen Rotor (307) aufweist, mit den Schritten:

    a) Bestimmen einer ersten Position des Rotors (307) im Stillstand des Rotors mittels diskreter Signalinjektion (201);
    b) Beschleunigen des Rotors (307) mittels eines gesteuerten Drehfeldes (203);
    c) Bestimmen einer Drehzahl des Rotors (307) und einer zweiten Position des Rotors (307) auf Basis einer, insbesondere einer einzigen, Gegen-EMK nach Erreichen einer vorgegebenen Drehfeldfrequenz in Schritt b) (205);
    d) Vergleichen der in Schritt c) bestimmten Drehzahl mit einem ersten vorgegebenen Drehzahlwert (207); und
    e) falls die in Schritt c) bestimmte Drehzahl größer als der erste vorgegebene Drehzahlwert ist: Wechsel in einen Closed-Loop-Betrieb auf Basis der Gegen-EMK (209).

3.  Verfahren nach Anspruch 1 oder 2, wobei die diskrete Signalinjektion in Schritt a) eine definierte und/oder endliche Anzahl an Pulsen umfasst.

4.  Verfahren nach einem der vorangehenden Ansprüche, wobei der Schritt b) umfasst: Beschleunigen des Rotors (307), wobei ein Motorstrom eingeregelt wird und eine Amplitude des Motorstroms abhängig von dem gesteuerten Drehfeld ist, wobei die Amplitude des Motorstroms insbesondere konstant ist.

5.  Verfahren nach einem der vorangehenden Ansprüche, wobei der Schritt c) umfasst: Bestimmen der Drehzahl des Rotors (307) auf Basis der Gegen-EMK nach Erreichen einer definierten Zeit.

6.  Verfahren nach einem der vorangehenden Ansprüche, wobei der Schritt c) umfasst: Bestimmen der Drehzahl des Rotors (307) anhand einer gestellten Motorspannung, insbesondere Reduzieren der Amplitude des Motorstroms zeitlich vor dem Bestimmen der Drehzahl.

7.  Verfahren nach einem der vorangehenden Ansprüche, wobei der Schritt c) umfasst: Bestimmen der Drehzahl des Rotors (307) über eine gemessene Motorspannung im Freilauf.

8.  Verfahren nach einem der vorangehenden Ansprüche, wobei, falls die in Schritt c) bestimmte Drehzahl kleiner als der erste vorgegebene Drehzahlwert ist, ein nach dem Schritt d) auszuführender Schritt f) umfasst: Abbremsen (111,211) des Rotors (307) und Wiederholen der Schritte a) bis d).

9.  Verfahren nach Anspruch 8, wobei der Schritt f) umfasst: Abbremsen (111,211) mittels einer Kurzschlussbremsung.

10. Verfahren nach einem der Ansprüche 8 bis 9, wobei der Schritt f) umfasst: Abbremsen (111,211) bis zu einer Drehzahl des Rotors (307), die kleiner als ein zweiter vorgegebener Drehzahlwert ist.

**11.** Verfahren nach einem der Ansprüche 8 bis 10, wobei der Schritt f) umfasst: Bestimmen der Drehzahl anhand der Amplitude des Motorstroms und/oder einer Frequenz des Motorstroms.

**12.** Verfahren nach einem der Ansprüche 8 bis 11, wobei beim Wiederholen des Schritts b) im Vergleich zum vorherigen Schritt b) das gesteuerte Drehfeld und/oder die, insbesondere von der Drehfeldfrequenz abhängige, Amplitude des Motorstroms angepasst wird.

**13.** Verfahren nach einem der Ansprüche 8 bis 12, wobei beim Wiederholen des Schritts b) im Vergleich zum vorherigen Schritt b) das gesteuerte Drehfeld und/oder die, insbesondere von der Drehfeldfrequenz abhängige, Amplitude des Motorstroms schrittweise angepasst wird mit zunehmender Schrittweite.

**14.** Anordnung (301) aufweisend einen EC-Motor (303), der einen Stator (305) und einen Rotor (307) aufweist, und eine mit dem EC-Motor (303) elektrisch verbundene oder verbindbare Steuerung (309), wobei die Steuerung (309) zur Ausführung eines Verfahrens gemäß einem der vorangehenden Ansprüche eingerichtet ist.

**15.** Gartengerät (311), Vorrichtung (311) zum Einsatz in der Landschaftspflege oder in Straßenmeistereien und/oder land- oder forstwirtschaftlich genutzte Vorrichtung (311), jeweils aufweisend eine Anordnung (301) nach Anspruch 14, wobei (i) das Gartengerät (311) oder die Vorrichtung (311) mittels eines Akkus betreibbar ist und/oder (ii) das Gartengerät (311) oder die Vorrichtung (311) als eine Heckenschere oder eine Kreiselschere oder eine Grasschere oder ein Grastrimmer oder ein Heckenschneider oder ein Hochentaster oder ein Bohrgerät oder ein Blasgerät oder ein Reinigungsgerät, insbesondere ein Hochdruckreiniger, oder ein Sauggerät oder ein Spritz- und/oder Sprühgerät oder eine Säge oder ein Gehölzschneider oder eine Astschere oder ein Multi-Tool oder ein Freischneider oder ein Gesteinschneider oder ein Trennschleifer ausgebildet ist.

Fig. 1

Fig. 2

301    305         307
            303

Fig. 3

311         313

Fig. 4